# EUROPÄISCHE PATENTSCHRIFT

(11) **EP 3 328 913 B1**
(45) Veröffentlichungstag und Bekanntmachung des Hinweises auf die Patenterteilung: **01.12.2021**
(21) Anmeldenummer: 16744372.0
(22) Anmeldetag: 26.07.2016
(51) Int. Cl.: C08G 18/69, C09J 175/04, C08G 18/48, C08G 18/50, C08G 18/76, C08G 18/10, C08G 18/22, C08G 18/42, C08G 18/44, C08G 18/79, C09D 175/14, B29B 7/72, C04B 26/16, C04B 40/06

(54) **HYDROPHOBE UND HOCHELASTISCHE ZWEIKOMPONENTIGE POLYURETHANZUSAMMENSETZUNG MIT VON DER TEMPERATUR UNABHÄNGIGEN MECHANISCHEN EIGENSCHAFTEN UND KLEBEEIGENSCHAFTEN**
HYDROPHOBIC, HIGHLY ELASTIC TWO-COMPONENT POLYURETHANE COMPOUND WITH MECHANICAL PROPERTIES AND ADHESIVE PROPERTIES WHICH ARE NOT DEPENDENT ON THE TEMPERATURE
COMPOSITION DE POLYURETHANE A DEUX COMPOSANTS HAUTEMENT ELASTIQUE ET HYDROPHOBE AYANT DES PROPRIETES MECANIQUES INDEPENDANTES DE LA TEMPERATURE ET DES PROPRIETES D'ADHESION

(30) Priorität: 30.07.2015 EP 15179142
(43) Veröffentlichungstag der Anmeldung: 06.06.2018
(73) Patentinhaber: Sika Technology AG, 6340 Baar (CH)
(72) Erfinder: KELCH, Steffen, 8102 Oberengstringen (CH); SCHLUMPF, Michael, 8143 Stallikon (CH); VOCI, Tina, 8050 Zürich (CH)
(74) Vertreter: Sika Patent Attorneys
(86) Internationale Anmeldenummer: PCT/EP2016/067766
(87) Internationale Veröffentlichungsnummer: WO 2017/017089

(56) Entgegenhaltungen:
- EP-A2- 1 279 687
- JP-A- 2000 290 630
- US-A1- 2005 087 290
- US-A1- 2006 247 370

## Beschreibung

### Technisches Gebiet

Die Erfindung betrifft das Gebiet der zweikomponentigen Polyurethanzusammensetzungen und ihre Verwendung als Klebstoff oder Dichtstoff.

### Stand der Technik

Strukturelle Klebstoffe, inklusive der Konstruktions- und Montageklebstoffe, werden in der Fertigungsindustrie häufig verwendet, um Bauteile derart miteinander zu verkleben, dass der Klebeverbund Teil einer dauerhaft belastbaren Konstruktion ist. Solche Klebstoffe sind typischerweise elastisch und müssen hohe Ansprüche in Bezug auf ihre Verarbeitbarkeit, Festigkeit und Anhaftungskräfte erfüllen. Für solche Anwendungen ist der Einsatz von zweikomponentigen Polyurethanzusammensetzungen auf der Basis von Polyolen und Polyisocyanaten seit Langem bekannt.

Im Vergleich zu einkomponentigen Polyurethanzusammensetzungen bieten zweikomponentige Polyurethanzusammensetzungen den Vorteil eines beschleunigten Festigkeitsaufbaus. Das liegt daran, dass für die Aushärtung von einkomponentigen Polyurethanzusammensetzungen eine Reaktion mit Luftfeuchtigkeit erforderlich ist, welche in ihrer Geschwindigkeit auch diffusionsgesteuert und somit nur begrenzt beschleunigbar ist. Bei zweikomponentigen Polyurethanzusammensetzungen reagieren die Komponenten nach ihrer Vermischung miteinander unter Aushärtung auch dann zuverlässig und schnell, wenn nur wenig Wasser aus der Umgebung verfügbar ist.

Zudem kann bei zweikomponentigen Polyurethanzusammensetzungen durch geeignete Zusammenstellung der Einzelkomponenten ein breiteres Spektrum an mechanischen Eigenschaften eingestellt werden, das von weichelastischen bis zu hochstrukturellen Eigenschaften reicht. Eine Einschränkung gegenüber einkomponentigen Polyurethanzusammensetzungen, die insbesondere bei viskoelastischen Materialeigenschaften zum Tragen kommt, besteht aber in Bezug auf die Glasübergangstemperatur, die für zweikomponentige Polyurethanzusammensetzungen deutlich höher ist und damit auch in den Gebrauchstemperaturbereich des Klebstoffs fallen kann. Bei einem viskoelastischen Klebstoff führt dies dazu, dass dessen Steifigkeit und Elastizitätsmodul beim Absinken der Temperatur auf oder in die Nähe der Glasübergangstemperatur stark ansteigt, so dass der Klebstoff über den ganzen Gebrauchstemperaturbereich betrachtet stark variable mechanische Eigenschaften aufweist. Dies macht eine geeignete Auslegung der Verklebung, insbesondere bei Klebstoffen, die bei ihrer Anwendung großen Temperaturdifferenzen ausgesetzt sind, relativ schwierig.

Andererseits weisen zweikomponentige Polyurethanzusammensetzungen neben dem vorstehend erwähnten raschen Festigkeitsaufbau den weiteren Vorteil auf, dass sie ausschließlich aus hydrophoben Rohstoffen bestehen können. Dadurch weisen die aus solchen Zusammensetzungen nach dem Aushärten erhaltenen Klebstoffe in der Regel nur eine geringe Wasseraufnahme auf und zeigen eine verbesserte Alterungsbeständigkeit. Darüber hinaus ist der Haftungsaufbau auf niederenergetischen Oberflächen wie Polyolefinen oder Polycarbonaten im Vergleich zu Polyurethanen, die auf polaren Bausteinen basieren, wesentlich verbessert.

Ein Beispiel eines Polyurethanklebstoffs, der auf hydrophoben Polybutadienen beruht, wird in der US 4,812,524 A beschrieben. Die in der US 4,812,524 offenbarten Klebstoffe beruhen auf Kombinationen von Amin- und Hydroxyterminierten Polybutadienen, die mit Polyisocyanaten zu Polyurethanen umgesetzt werden. Die beschriebenen Klebstoffe sollen sich durch ausgezeichnete Klebeeigenschaften und eine starke Bindung auf Stahlsubstraten auszeichnen.

In der FR 2 772 781 A werden Polyurethanklebstoffe mit hohem Scherwiderstand beschrieben, die auf Kombinationen von Hydroxyterminierten Polybutadienen, mit Polyethylenglycol-Seitenketten modifizierten Polybutadienpolyolen und Polyisocyanaten beruhen. Es wird angegeben, dass sich der Scherwiderstand durch den Zusatz von mit Polyethylenglycol-Seitenketten modifizierten Polybutadienpolyolen verbessern lässt, insbesondere bei Verwendung längerer Polyethylenglycol-Seitenketten.

Ein weiterer Vorteil von zweikomponentigen Polyurethanzusammensetzungen besteht darin, dass im Vergleich zu entsprechenden einkomponentigen Polyurethanzusammensetzungen der Zusatz von Weichmachern für die Formulierung von weichelastischen Klebstoffen in der Regel nicht erforderlich ist, so dass eine Migration der Weichmacher aus dem Klebstoff beispielsweise in angrenzende Substrate, die zu einer Verschlechterung der Klebeeigenschaften führen kann, vermieden wird. Dieses Problem tritt insbesondere beim Verkleben von glasigen thermoplastischen Kunststoffen wie Polycarbonat, Polymethylmethacrylat oder Polystyrol auf, wo eine Weichmachermigration aus dem Klebstoff in das Substrat zur Bildung von Spannungsrissen führen kann. Für viele geklebte Konstruktionen ist es wichtig, dass der Klebstoff über den gesamten Bereich seiner Gebrauchstemperatur, insbesondere im Temperaturbereich von etwa -35°C bis etwa 80°C, eine möglichst einheitliche Festigkeit aufweist, beispielsweise ein möglichst einheitliches Elastizitätsmodul, so dass das mechanische Verhalten des Klebeverbunds in geeigneter Weise in die Berechnung der Konstruktion einfließen kann. Erwünscht sind insbesondere nicht glasig oder spröde sondern zäh-elastische Klebstoffe. Zu diesem Zweck sollten die Klebstoffe eine tiefe untere Glasübergangstemperatur aufweisen, die deutlich unterhalb der Gebrauchstemperatur liegen sollte. Als Hintergrund hierzu ist anzumerken, dass bei Polyurethanen, die auf polymeren Polyolen einerseits und z.B. niedermolekularen Kettenverlängerern und Diisocyanaten andererseits aufgebaut sind, häufig zwei oder mehr Glasübergangstemperaturen beobachtet werden. Diese werden verursacht durch die sich bildenden Phasen bestehend aus Kettensegmenten des polymeren Polyols und an Urethanbindungen reichen und damit zur Ausbildung von Wasserstoffbrücken befähigten Kettensegmenten, welche sich durch Polyadditionsreaktion von Diisocyanaten und kurzkettigen Diolen, sogenannten Kettenverlängerern bilden.

Zudem sollten die Klebstoffe innerhalb ihres Anwendungstemperaturbereichs entweder keine oder zumindest nur sehr schwach ausgeprägte weitere Glasübergangstemperaturen, die von sich bildenden Mischphasen der oben beschriebenen Phasen herrühren, aufweisen, da solche Glasübergangstemperaturen mit Änderungen z.B. des E-Moduls des Klebstoffs einhergehen. Die frisch gemischten Klebstoffe sollten zudem gut verarbeitbar und in höheren Schichtdicken bis zu 10 mm und mehr verwendbar sein, und sowohl bei Umgebungstemperatur als auch in einem durch Wärme beschleunigten Aushärtungsprozess defektfrei zur Endfestigkeit gehärtet werden können. Schließlich sollten die Klebstoffe eine gute Anbindung an Lack-beschichtete metallische Substrate und Substrate mit geringer Oberflächenenergie zeigen.

In der WO 2010/052671 werden Polyurethanzusammensetzungen für kryogene Applikationen bis zu Temperaturen von -170°C beschrieben, die eine Scherfestigkeit von mehr als 10 MPa aufweisen sollen. Die beschriebenen Zusammensetzungen bestehen aus einer ersten Komponente, die ein Polyol, ausgewählt aus Polyetherpolyolen, Polyesterpolyolen und ungesättigten Polyolen, thermoplastische Polyurethane und Prepolymere mit einem mittleren Molekulargewicht zwischen 200 und 9'000 g/mol und einer OH-Funktionalität von 2 bis 4,6, sowie ein Amin enthält. Die zweite Komponente enthält ein Polyurethanpolymer mit einem mittleren Molekulargewicht von 840 bis 2'100 g/mol und einer NCO-Funktionalität von 2 bis 4. Diese Klebstoffe sollen insbesondere für die Verklebung und Versiegelung von Vielschichtstrukturen gegenüber Gasen und Flüssigkeiten geeignet sein, und können aufgrund ihrer Temperaturstabilität bis zu Temperaturen von -170°C für die Herstellung von Behältern für flüssiges Methan (LNG) verwendet werden.

In der WO 2014/040992 A1 werden strukturelle Polyurethanklebstoffe mit unteren Glasübergangstemperaturen im Bereich von etwa -40 bis -42°C beschrieben. Diese Klebstoffe bestehen aus einer ersten Komponente aus einem Triol mit einem Molekulargewicht im Bereich von 1'000 bis 10'000 g/mol, einem Diol mit einem Molekulargewicht im Bereich von 60 bis 150 g/mol sowie einem aliphatischen Polyamin mit einem Molekulargewicht im Bereich von 60 bis 500 g/mol, und einer zweiten Komponente, die ein Polyisocyanat und ein Isocyanatgruppen aufweisendes Polyurethanpolymer enthält. Das Triol, das Diol und das Polyamin sollen in solchen Mengen vorhanden sein, dass das Verhältnis der Anzahl der OH-Gruppen und der NH₂-Gruppen aus Diol und Polyamin gegenüber den OH-Gruppen aus dem Triol im Bereich von 3 bis 15 liegt und dass das Verhältnis der OH-Gruppen und NH₂-Gruppen von Diol und Polyamin im Bereich von 2 bis 30 liegt. Zur Härtung dieser Polyurethanklebstoffe werden Katalysatoren in Form von Metall-Chelat-Komplexen auf Basis von Fe(III), Ti(IV), Zr(IV) und Hf(IV) eingesetzt.

Die US 2006/247370 A1 beschreibt Lösungsmittel-resistente Haftklebstoffe auf Basis von silylierten Polymeren, die sich von Butadienen ableiten. Bei der Herstellung der Polymere werden zunächst Polyhydroxybutadiene mit Polyisocyanaten umgesetzt. Anschließend werden die nach der Reaktion im Produkt verbleibenden Isocyanatgruppen mit Silanen modifiziert. Die so erhaltenen Polymere härten bei Kontakt mit Wasser aus und sollen eine verbesserte Lösungsmittelresistenz aufweisen.

Die EP 1 279 687 A2 beschreibt Zusammensetzungen, die eine Mischung von nicht-verzweigten Polybutadienen mit weniger als zwei Hydroxygruppen pro Molekül und verzweigten Polybutadienen mit mehr als zwei Hydroxygruppen pro Molekül aufweisen. Diese Mischungen werden mit Polyisocyanaten zu Prepolymeren umgesetzt, und sollen sich nach Kettenverlängerung durch eine verbesserte Thermoplastizität und einen verbesserten Modul auszeichnen. Dies macht die Prepolymere für verschiedene Applikationen wie Wasserresistente Membranen, Versiegelungsmittel, Schmelzklebstoffe, Geomembranen oder flüssige Bindemittel für Bremssysteme verwendbar.

### Darstellung der Erfindung

Das in der WO 2014/040992 A1 offenbarte Klebstoffsystem weist bereits gute Gebrauchseigenschaften im Temperaturbereich von bis zu etwa -35°C auf. Bei einigen Applikationen, beispielsweise im Flugzeugbau, werden die Bauteile jedoch während ihrer Verwendung auch Temperaturen im Bereich von -40°C ausgesetzt. Bei diesen Temperaturen würden sich die Elastizitätseigenschaften der in der WO 2014/040992 A1 offenbarten Klebstoffsysteme stark ändern.

Es besteht daher ein Bedarf an Klebstoff- und Dichtstoffsystemen, insbesondere an zweikomponentigen Kleb- und Dichtstoffsystemen, die eine untere Glasübergangstemperatur im Bereich von etwa -50°C oder besser noch -55°C aufweisen und über einen weiteren Temperaturbereich, wie beispielsweise bis zu etwa 100°C oder sogar bis zu etwa 150°C, sehr ähnliche elastische Eigenschaften wie Bruchdehnung und E-Modul aufweisen.

Überraschenderweise wurde gefunden, dass eine zweikomponentige Polyurethanzusammensetzung nach Anspruch 1 diese Aufgabe löst. Diese enthält eine Kombination aus mindestens einem Polybutadienpolyol mit einer OH-Funktionalität im Bereich von 2.1 bis 4 und mindestens einem hydrophoben Diol und/oder mindestens einer Aminogruppen terminierten hydrophoben Verbindung in einem ausgewählten Verhältnis. Überraschenderweise wurde festgestellt, dass diese Polyurethanzusammensetzung zu einem Material mit hoher Festigkeit und Elastizität aushärtet und dabei eine nur schwach ausgeprägte Abhängigkeit der mechanischen Eigenschaften von der Temperatur zeigt und über sehr gute Haftungseigenschaften auf unterschiedlichen Substraten verfügt, während ähnliche Zusammensetzungen, bei welchen diese Substanzen in andern Verhältnissen vorliegen oder welche andere Polyolen oder Diole enthalten, nicht diese vorteilhaften Eigenschaften zeigen. Zudem ist diese Polyurethanzusammensetzung besonders beständig gegenüber Feuchtigkeit.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Polyurethanzusammensetzung mit
- einer ersten Komponente, umfassend mindestens ein Polybutadienpolyol **P1** mit einem mittleren Molekulargewicht im Bereich von 2'000 bis 10'000 g/mol und einer mittleren OH-Funktionalität im Bereich von 2.1 bis 4, und
- einer zweiten Komponente, umfassend mindestens ein Polyisocyanat und gegebenenfalls mindestens ein Isocyanat-terminiertes Polyurethanprepolymer,
wobei die Polyurethanzusammensetzung weiterhin
mindestens ein hydrophobes Diol **P2** mit einem mittleren Molekulargewicht im Bereich von 500 bis 5'000 g/mol ausgewählt aus der Gruppe bestehend aus Polyesterdiolen, Polycarbonatdiolen und Polyetherdiolen mit einer mindestens 4 C-Atomen aufweisenden Repetiereinheit und/oder
mindestens eine mit Aminogruppen terminierte hydrophobe Verbindung **P3** mit einem mittleren Molekulargewicht im Bereich von 200 bis 2'000 g/mol enthält,
wobei das Molverhältnis **V1** der Anzahl Hydroxyl-Gruppen aus dem Polybutadienpolyol **P1** zur Anzahl Hydroxyl- und primärer und sekundärer Amino-Gruppen aus dem Diol **P2** und der Verbindung **P3** im Bereich von 2:1 bis 16:1 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "Offenzeit" wird in diesem Dokument die Zeit bezeichnet, innerhalb welcher die zu verklebenden Teile gefügt sein müssen, nachdem die Komponenten vermischt sind.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich von 0.5 bis 5%, gemeint ist.

Als "Raumtemperatur" wird im vorliegenden Dokument eine Temperatur von 23 °C bezeichnet.

Die "mittlere OH-Funktionalität" stellt die Anzahl der OH-Gruppen pro Polymermolekül, gemittelt über alle Polymermoleküle, dar. Enthalten beispielsweise 50% aller Polymermoleküle zwei und die anderen 50% drei Hydroxygruppen, so ergibt sich eine mittlere OH-Funktionalität von 2,5. Die mittlere OH-Funktionalität kann insbesondere durch Berechnung aus der Hydoxyzahl und dem über GPC ermittelten Molekulargewicht Mₙ ermittelt werden.

Die erste Komponente der Zusammensetzung umfasst mindestens ein Polybutadienpolyol **P1** mit einem mittleren Molekulargewicht im Bereich von 2'000 bis 10'000 g/mol und einer mittleren OH-Funktionalität im Bereich von 2.1 bis 4.

Das mittlere Molekulargewicht des Polybutadienpolyols **P1** liegt bevorzugt im Bereich von 2'000 bis 4'000 g/mol, insbesondere im Bereich von 2'500 bis 3'000 g/mol.

Die mittlere OH-Funktionalität des Polybutadienpolyols **P1** liegt bevorzugt im Bereich von 2.1 bis 2.9, insbesondere im Bereich von 2.3 bis 2.7.

Ein solches Polybutadienpolyol ist einfach erhältlich und weist eine vergleichsweise niedrige Viskosität auf, was eine gute Verarbeitbarkeit der Zusammensetzung ermöglicht.

Geeignete Polybutadienpolyole sind insbesondere erhältlich durch Polymerisation von 1,3-Butadien und Allylalkohol in einem geeigneten Verhältnis oder durch Oxidation von geeigneten Polybutadienen.

Geeignete Polybutadienpolyole enthalten insbesondere Strukturelemente der Formel (I) und gegebenenfalls Strukturelemente der Formel (II) oder (III).

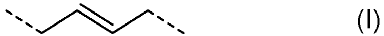

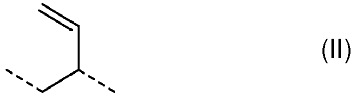

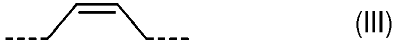

Ein bevorzugtes Polybutadienpolyol enthält
40 bis 80 %, insbesondere 55 bis 65 % des Strukturelements der Formel (I),
0 bis 30 %, insbesondere 15 bis 25 %, des Strukturelements der Formel (II),
0 bis 30 %, insbesondere 15 bis 25 %, des Strukturelements der Formel (III).

Ein besonders geeignetes Polybutadienpolyol ist Poly bd^{®} R-45HTLO oder Poly bd^{®} R-45M (beide von Cray Valley)

Bevorzugt enthält die zweikomponentige Polyurethanzusammensetzung insgesamt mindestens 40 Gew.-%, insbesondere 45 bis 85 Gew.-%, besonders bevorzugt 50 bis 70 Gew.-%, Polybutadienpolyol **P1.**

Die zweikomponentige Polyurethanzusammensetzung enthält weiterhin mindestens ein hydrophobes Diol **P2** mit einem mittleren Molekulargewicht im Bereich von 500 bis 5'000 g/mol ausgewählt aus der Gruppe bestehend aus Polyesterdiolen, Polycarbonatdiolen und Polyetherdiolen mit einer mindestens 4 C-Atomen aufweisenden Repetiereinheit, wobei es sich bei den Polyetherdiolen mit einer mindestens 4 C-Atomen aufweisenden

Repetiereinheit vorzugsweise um Polytetramethylenoxiddiol handelt, und/oder
mindestens eine mit Aminogruppen terminierte hydrophobe Verbindung **P3** mit einem mittleren Molekulargewicht im Bereich von 200 bis 2'000 g/mol.

Der Begriff "hydrophob" ist im Zusammenhang mit dem Diol **P2** so aufzufassen, dass das dem Diol zugrundeliegende Polymer nicht mit hydrophilen Funktionalitäten, beispielsweise in Form von polaren funktionellen Gruppen an der Hauptkette oder angehängten Seitenketten aus hydrophilen Polyethern wie Polyethylen- und Polypropylenglycolen, modifiziert ist, da solche Modifikationen die hydrophoben Eigenschaften wesentlich beeinträchtigen würden. Im Rahmen der Erfindung ist es demzufolge bevorzugt, wenn das dem Diol zugrundeliegende Polymer aus den genannten Materialien, d.h. aus Polybutadien, Polyestern, Polycarbonaten und Polyethern mit einer mindestens 4 C-Atomen aufweisenden Repetiereinheit besteht.

Das hydrophobe Diol **P2** ist bevorzugt ein aliphatisches oder cycloaliphatisches Diol, welches frei ist von aromatischen Bestandteilen.

Bevorzugt ist das hydrophobe Diol **P2** ausgewählt aus der Gruppe bestehend aus Polytetramethylenoxiddiol, Polycarbonatdiol und Polyesterdiol.

Ein besonders geeignetes Polyesterdiol ist ein Kondensationsprodukt von 3-Methyl-1,5-pentandiol und Adipinsäure oder Sebacinsäure. Solche Polyesterdiole sind beispielsweise unter dem Handelsnamen Kuraray P2010 von der Firma Kuraray erhältlich.

Ein besonders geeignetes aliphatisches Polycarbonatdiol basiert auf 3-Methyl-1,5-pentandiol und 1,6-Hexandiol und ist beispielsweise unter dem Handelsnamen Kuraray C2050 von der Firma Kuraray erhältlich.

Ein besonders geeignetes aliphatisches Polyestercarbonatdiol basiert auf 1,6-Hexandiol und ε-Caprolacton ist unter dem Handelsnamen Desmophen^{®} C 1200 von der Firma Bayer Material Science erhältlich.

Die zweikomponentige Polyurethanzusammensetzung enthält bevorzugt mindestens ein Diol **P2** in Form eines aliphatischen oder cycloaliphatischen Diols, bevorzugt ein Polytetramethylenoxiddiol oder ein Polycarbonatdiol basierend auf 3-Methyl-1,5- pentandiol und 1,6 Hexandiol, oder ein Polyestercarbonatdiol basierend auf 1,6-Hexandiol und ε-Caprolacton oder ein Polyesterdiol basierend auf 3-Methyl-1,5-pentandiol und Adipinsäure oder Sebacinsäure.

Das hydrophobe Diol **P2** weist bevorzugt ein mittleres Molekulargewicht im Bereich von 500 bis 3'000 g/mol, insbesondere 500 bis 2'000 g/mol, besonders bevorzugt 750 bis 1'500 g/mol, am meisten bevorzugt 750 bis 1'000 g/mol, auf.

Für den Fall, dass in der zweikomponentige Polyurethanzusammensetzung ein hydrophobes Diol **P2** und keine Verbindung **P3** vorhanden ist, enthält diese bevorzugt insgesamt mindestens 3 Gew.-%, insbesondere 3 bis 25 Gew.-%, besonders bevorzugt 5 bis 15 Gew.-%, hydrophobes Diol **P2.**

Das hydrophobe Diol **P2** kann als Bestandteil der ersten oder als Bestandteil der zweiten Komponente vorhanden sein. Für den Fall, dass es als Bestandteil der zweiten Komponente vorhanden ist, reagieren seine OH-Gruppen mit vorhandenen Isocyanatgruppen unter Ausbildung eines Isocyanatgruppen aufweisenden Prepolymers ab.

Es ist auch möglich, das hydrophobe Diol **P2** vorgängig mit einem Diisocyanat zu einem Isocyanatgruppen aufweisenden Prepolymer umzusetzen und dieses Prepolymer anschliessend mit dem Polyisocyanat der zweiten Komponente zu vermischen, wobei das zur Herstellung des Prepolymers verwendete Diisocyanat und das in der zweiten Komponente vorhandene Polyisocyanat vom gleichen Typ oder unterschiedlich sein können.

Die mit Aminogruppen terminierte hydrophobe Verbindung **P3** ist geeigneterweise ein Bestandteil der ersten Komponente. Darüber hinaus ist es bevorzugt, wenn die Aminogruppen terminierte hydrophobe Verbindung **P3** auf einem Polymer beruht, das ausgewählt ist aus Polyestern, Polycarbonaten und Polyethern mit einer mindestens 4 C-Atomen aufweisenden Repetiereinheit. Von diesen sind Polyether mit einer mindestens 4 C-Atomen aufweisenden Repetiereinheit, insbesondere in Form von Polytetramethylenoxid, bevorzugt. Die Verbindung **P3** ist bevorzugt eine Verbindung mit zwei Aminogruppen, welche primäre oder sekundäre Aminogruppen sind.

Bevorzugt sind es primäre aromatische Aminogruppen, welche gegebenenfalls eine sterische Hinderung oder eine zusätzliche elektronische Hinderung aufweisen.

Bevorzugt ist die Verbindung **P3** ein p-Aminobenzoesäurediester von einem hydrophoben Diol.

Besonders bevorzugt ist die Verbindung **P3** sind ein p-Aminobenzoesäurediester von einem Polytetramethylenoxiddiol.

Besonders bevorzugt ist die Verbindung **P3** ein p-Aminobenzoesäurediester von einem Polytetramethylenoxiddiol mit einem mittleren Molekulargewicht im Bereich von 500 bis 2'000 g/mol, vorzugsweise 600 g bis 1'500 g/mol, insbesondere 600 g/mol bis 1'200 g/mol.

Besonders geeignet sind die Typen Versalink^{®} P-650 und Versalink^{®} P-1000 (beide von Air Products).

Die bevorzugten Verbindungen **P3** ermöglichen Zusammensetzungen mit einem besonders hohen E-Modul.

Für den Fall, dass in der zweikomponentigen Polyurethanzusammensetzung eine Verbindung **P3** und kein hydrophobes Diol **P2** vorhanden ist, enthält diese bevorzugt insgesamt mindestens 3 Gew.-%, insbesondere 3 bis 25 Gew.-%, besonders bevorzugt 5 bis 15 Gew.-%, der Verbindung **P3.**

Liegt in der zweikomponentigen Polyurethanzusammensetzung sowohl ein hydrophobes Diol **P2** als auch eine Verbindung **P3** vor, enthält die Zusammensetzung bevorzugt insgesamt mindestens 3 Gew.-%, insbesondere 3 bis 25 Gew.- %, besonders bevorzugt 5 bis 15 Gew.-%, der Summe aus hydrophobem Diol **P2** und Verbindung **P3.**

In der zweikomponentigen Polyurethanzusammensetzung sind das Polybutadienpolyol **P1** und das hydrophobe Diol **P2** und/oder die Verbindung **P3** in einer solchen Menge vorhanden, dass das Verhältnis **V1** der Anzahl Hydroxyl-Gruppen aus dem Polybutadienpolyol **P1** zur Anzahl Hydroxyl- und primärer und sekundärer Amino-Gruppen aus Diol **P2** und der Verbindung **P3** im Bereich von 2:1 bis 16:1 liegt.

Für den Fall, dass in der Zusammensetzung sowohl ein Diol **P2** als auch eine Verbindung **P3** vorhanden sind, werden deren NCO-reaktive Gruppen zusammengezählt.

NCO-reaktive Gruppen sind Hydroxylgruppen und primäre oder sekundäre Aminogruppen.

Für den Fall, dass das Diol **P2** in Form eines Prepolymers als Bestandteil der zweiten Komponente vorhanden ist, werden dessen Hydroxylgruppen als NCO-reaktive Gruppen im Molverhältnis **V1** mitgezählt, obwohl sie bereits mit Isocyanatgruppen zu Urethangruppen umgesetzt sind.

Bevorzugt liegt das Molverhältnis **V1** im Bereich von 3:1 bis 10:1, insbesondere im Bereich von 4.5:1 bis 8:1.

Ein höherer Gehalt an Polybutadienpolyol **P1** ermöglicht Polyurethanzusammensetzungen mit einem etwas tieferen E-Modul und eher weichelastischen Eigenschaften.

Die zweite Komponente der Polyurethanzusammensetzung umfasst mindestens ein Polyisocyanat und gegebenenfalls mindestens ein Isocyanat-terminiertes Polyurethanprepolymer.

Das Polyisocyanat ist insbesondere ein monomeres Diisocyanat, oder ein Oligomer oder ein Polymer oder ein Derivat eines monomeren Diiisocyanats, oder eine beliebige Mischung davon. Unter Oligomeren und Polymeren werden hierbei Homopolymere und -oligomere verstanden, die ausschließlich aus Di- oder Triisocyanatbestandteilen bestehen.

Geeignete aromatische monomere Diisocyanate sind insbesondere 2,4- oder 2,6-Toluylendiisocyanat oder beliebige Gemische dieser Isomeren (TDI), 4,4'-, 2,4'- oder 2,2'-Diphenylmethandiisocyanat oder beliebige Gemische dieser Isomeren (MDI), Gemische aus MDI und MDI-Homologen (polymeres MDI oder PMDI), 1,3- oder 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI) oder Dianisidindiisocyanat (DADI).

Davon bevorzugt ist MDI und TDI, insbesondere MDI.

Geeignete aliphatische monomere Diisocyanate sind insbesondere 1,4-Tetramethylendiisocyanat, 2-Methylpentamethylen-1,5-diisocyanat, 1,6-Hexamethylendiisocyanat (HDI), 2,2(4),4-Trimethyl-1,6-hexamethylendiisocyanat (TMDI), 1,10-Decamethylendiisocyanat, 1,12-Dodecamethylendiisocyanat, Lysin- oder Lysinesterdiisocyanat, Cyclohexan-1,3- oder -1,4-diisocyanat, 1-Methyl-2,4- oder -2,6-diisocyanatocyclohexan oder beliebige Gemische dieser Isomeren (HTDI oder H₆TDI), 1-Isocyanato-3,3,5-trimethyl-5-isocyanatomethyl-cyclohexan (Isophorondiisocyanat oder IPDI), Perhydro-2,4'- oder -4,4'-diphenylmethandiisocyanat (HMDI oder H₁₂MDI), 1,4-Diisocyanato-2,2,6-trimethylcyclohexan (TMCDI), 1,3- oder 1,4-Bis-(isocyanatomethyl)cyclohexan, m- oder p-Xylylendiisocyanat (m- oder p-XDI), m- oder p-Tetramethyl-1,3- oder -1,4-xylylendiisocyanat (m- oder p-TMXDI) oder Bis-(1-lsocyanato-1-methylethyl)-naphthalin.

Davon bevorzugt ist IPDI oder HDI.

Geeignete Oligomere, Polymere oder Derivate von monomeren Diisocyanaten sind insbesondere abgeleitet von MDI, TDI, HDI oder IPDI.

Bevorzugt ist das Polyisocyanat 4,4'- oder 2,4'- oder 2,2'-Diphenylmethandiisocyanat oder ein beliebiges Gemisch dieser Isomeren (MDI), oder eine Mischung aus MDI und MDI-Homologen (polymeres MDI oder PMDI), oder eine Mischung aus MDI und davon abgeleiteten Oligomeren, Polymeren oder Derivaten.

Besonders bevorzugt ist das Polyisocyanat eine bei Raumtemperatur flüssige Form von MDI, welche insbesondere einen hohen Gehalt an 4,4'-Diphenylmethandiisocyanat aufweist. Das sogenannte "flüssige MDI" stellt insbesondere entweder durch partielle chemische Modifizierung - insbesondere Carbodiimidisierung bzw. Uretoniminbildung - verflüssigtes 4,4'-Diphenylmethandiisocyanat dar, oder es ist ein durch Abmischen gezielt herbeigeführtes oder durch den Herstellungsprozess bedingtes Gemisch von 4,4'-Diphenylmethandiisocyanat mit anderen MDI-Isomeren (2,4'-Diphenylmethandiisocyanat und/oder 2,2'-Diphenylmethandiisocyanat), oder mit MDI-Oligomeren oder MDI-Homologen.

Insbesondere ist das Polyisocyant ein monomer MDI-Typ mit erhöhtem Anteil an 2,4'-MDI, beispielsweise die kommerziell erhältlichen Produkte Desmodur^{®} 2424 (von Bayer MaterialScience) oder Lupranat^{®} MI (von BASF), oder ein Gemisch von monomerem MDI und MDI-Homologen mit einem niedrigen Anteil an Homologen, beispielsweise die kommerziell erhältlichen Produkte Desmodur^{®} VL50 (von Bayer MaterialScience) oder Voranate^{®} M 2940 (von Dow), oder ein partiell carbodiimidisiertes 4,4'-Diphenylmethandiisocyanat, beispielsweise die kommerziell erhältlichen Produkte Desmodur^{®} CD (von Bayer Material Science), Lupranat^{®} MM 103 (von BASF), Isonate^{®} M 143 oder Isonate^{®} M 309 (beide von Dow), Suprasec^{®} 2020 oder Suprasec^{®} 2388 (beide von Huntsman).

Mit diesen Polyisocyanaten werden besonders gute Verarbeitungseigenschaften und besonders hohe Festigkeiten erhalten.

Das gegebenenfalls vorhandene Isocyanat-terminierte Polyurethanprepolymer basiert bevorzugt auf einem monomeren Diisocyanat ausgewählt aus der Gruppe bestehend aus MDI, TDI, IPDI und HDI. Davon bevorzugt ist MDI oder TDI.

Das gegebenenfalls vorhandene Isocyanat-terminierte Polyurethanprepolymer basiert in einer bevorzugten Ausführungsform auf demselben monomeren Diisocyanat wie das vorhandene Polyisocyanat.

In einer weiteren bevorzugten Ausführungsform ist das zur Herstellung des Isocyanat-terminierten Polyurethanpolymers verwendete monomere Diisocyanat verschieden vom in der zweiten Komponente vorhandenen Polyisocyanat.

Das gegebenenfalls vorhandene Isocyanat-terminierte Polyurethanprepolymer ist in einer bevorzugten Ausführungsform hergestellt aus mindestens einem hydrophoben Diol **P2,** wie vorgängig beschrieben, und mindestens einem monomeren Diisocyanat. Dabei kann diese Umsetzung getrennt vom Polyisocyanat der zweiten Komponente erfolgen, wobei ein von diesem Polyisocyanat verschiedenes Diisocyanat verwendet werden kann. Die Umsetzung kann aber auch so erfolgen, dass das hydrophobe Diol **P2** mit dem Polyisocyanat der zweiten Komponente vermischt wird, wobei sich in situ ein Isocyanat-terminiertes Polyurethanpropolymer bildet.

Das gegebenenfalls vorhandene Isocyanat-terminierte Polyurethanprepolymer ist in einer weiteren bevorzugten Ausführungsform hergestellt aus mindestens einem Di- oder Polyol, welches verschieden vom hydrophoben Diol **P2** ist, wobei in diesem Fall der Gehalt an Prepolymer in der Zusammensetzung relativ gering ist, sodass die Hydrophobie der gesamten Zusammensetzung weitgehend erhalten bleibt. Bevorzugt beträgt der Anteil eines solchen nicht auf einem hydrophoben Diol **P2** beruhenden Prepolymer in der gesamten Zusammensetzung höchstens 5 Gew.-%, insbesondere höchstens 2 Gew.-%.

Ein weiteres besonders bevorzugtes Isocyanat-terminiertes Polyurethanprepolymer basiert auf einem Diol **P2,** welches ein Polycarbonatdiol darstellt, wobei insbesondere Desmophen^{®} C 1200 (von Bayer Material Science) bevorzugt ist. Damit wird insbesondere eine besonders geringe Abhängigkeit des Elastizitatsmoduls E* von der Temperatur ermöglicht.

In der gesamten Polyurethanzusammensetzung liegt das Molverhältnis zwischen den vorhandenen Isocyanatgruppen zu den vorhandenen NCOreaktiven Gruppen im Bereich von 1.5:1 bis 1:1, insbesondere 1.25:1 bis 1:1, besonders bevorzugt 1.15:1 bis 1:1 liegt.

Die Polyurethanzusammensetzung kann zusätzlich weitere mit Isocyanatgruppen reaktionsfähige Substanzen enthalten, insbesondere sogenannte Kettenverlängerer, welche typischerweise Diole mit einem Molekulargewicht von weniger als 200 g/mol sind. Bevorzugt enthält die erste Komponente der Zusammensetzung aber nur geringe Anteile an Kettenverlängerern, bevorzugt maximal 5 Gew.-%, besonders bevorzugt maximal 2 Gew.-%, insbesondere maximal 0.5 Gew.-%. Ein hoher Gehalt an Kettenverlängerern reduziert die Elastizität der Zusammensetzung übermässig.

Die Polyurethanzusammensetzung kann weiterhin Katalysatoren enthalten, welche die Reaktion von Hydroxylgruppen mit Isocyanatgruppen beschleunigen.

Bevorzugt ist mindestens ein Katalysator enthalten, welcher insbesondere ausgewählt ist aus der Gruppe bestehend aus Bismuth(III)-Verbindungen, Zink(ll)-Verbindungen und Zirkonium(IV)-Verbindungen.

Besonders bevorzugt ist der Katalysator ein Bismuth(III)-carboxylat, ein Zn(II)-carboxylat, ein Bismuth(lll)-1,3-ketoacetat, ein Zirkonium(IV)-1,3-ketoacetat, ein Bismuth(III)-oxinat, ein Bismuth(lll)-1,3-ketoamidat, ein Zirkonium(IV)-1,3-ketoamidat, ein Zirkonium(IV)-diketonat, oder eine Mischung davon.

Es ist auch möglich, nicht-metall basierte Katalysatoren, wie insbesondere tertiäre Amine, Amidine oder Guanidine zuzusetzen.

Es ist im Rahmen der vorliegenden Erfindung nicht von wesentlicher Bedeutung, ob der Katalysator als Bestandteil der ersten oder zweiten Komponente formuliert wird, oder ob beide Komponenten einen Anteil an Katalysator enthalten. Es ist jedoch bevorzugt, wenn der Katalysator als Bestandteil der ersten Komponente formuliert wird. Wird die zweite Komponente unter *in situ* Bildung eines Isocyanat-terminierten Polyurethanprepolymers formuliert, so ist es zweckmäßig wenn der zweiten Komponente zumindest ein Teil der gesamten Katalysatormenge zugesetzt wird. Auch wenn ein Isocyanat-terminiertes Polyurethanpreoplymer, welches getrennt vom Polyidocyanat der zweiten Komponente hergestellt wurde, verwendet wird, kann es bevorzugt sein, dass zu dessen Herstellung ein Katalysator verwendet wurde, welcher schliesslich in der zweiten Komponente enthalten ist.

Die Polyurethanzusammensetzung kann neben den bereits erwähnten Bestandteilen weitere Bestandteile, wie sie dem Fachmann aus der Zweikomponenten-Polyurethanchemie bekannt sind, enthalten. Diese können in nur einer Komponente oder in beiden vorhanden sein.

Als weitere Bestandteile geeignet sind Füllstoffe, Lösungsmittel, Weichmacher Haftvermittler, Stabilisatoren, Rheologiehilfsmittel, Trocknungsmittel wie insbesondere Zeolithe, Stabilisatoren gegen Oxidation, Wärme, Licht- oder UV-Strahlung, flammhemmende Substanzen, oder oberflächenaktive Substanzen wie insbesondere Netzmittel oder Entschäumer.

Bevorzugt enthält die Zusammensetzung mindestens einen Füllstoff. Besonders bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, Graphit, Russ, Metallpulver wie Aluminium, Kupfer, Eisen, Silber oder Stahl, PVC-Pulver und/oder Hohlkugeln.

Die Zugabe von Füllstoffen ist dahingehend von Vorteil, dass dadurch die rheologischen Eigenschaften beeinflusst und die Festigkeit der ausgehärteten Polyurethanzusammensetzung erhöht werden können. Bevorzugt enthält die Polyurethanzusammensetzung mindestens einen Füllstoff ausgewählt aus der Gruppe bestehend aus Calciumcarbonat, insbesondere in gemahlener Form, Kaolin, Baryt, Talk, Quarzmehl, Dolomit, Wollastonit, Kaolin, calciniertes Kaolin Mica und Russ.

Durch die Verwendung von Russ wird insbesondere auch die Thixotropie bzw. die Standfestigkeit der Zusammensetzung erhöht, was bevorzugt ist. Ein besonders geeignetes Thioxotropiermittel ist industriell hergestellter Russ.

Der Anteil der Füllstoffe in der Polyurethanzusammensetzung liegt bevorzugt im Bereich von 5 bis 60 Gew.-%, besonders bevorzugt im Bereich von 5 bis 50 Gew.-% und insbesondere im Bereich von 10 bis 40 Gew.-%.

Dabei liegt der Anteil von Russ bevorzugt im Bereich von 1 bis 15 Gew-%, insbesondere im Bereich von 5 bis 15 Gew-%.

Bevorzugt enthält die Zusammensetzung mindestens einen Haftvermittler, insbesondere mindestens ein Organoalkoxysilan wie insbesondere ein Aminosilan, Mercaptosilan, Epoxysilan, Vinylsilan, (Meth)acrylsilan, Isocyanatosilan, Carbamatosilan, Alkylsilan oder S-(Alkylcarbonyl)mercaptosilan oder eine oligomere Forme dieser Silane.

Ein besonders geeigneter Haftermittler ist 3-Glycidoxypropyltrimethoxysilan, 3-Aminopropyltrimethoxysilan, N-(2-Aminoethyl)-3-aminopropyltrimethoxysilan, N-(2-Aminoethyl)-N'-[3-(trimethoxysilyl)propyl]ethylendiamin, 3-Mercaptopropyltrimethoxysilan, 3-Isocyanatopropyltrimethoxysilan, 3-Ureidopropyltrimethoxysilan oder Vinyltrimethoxysilan, oder die entsprechenden Silane mit Ethoxygruppen anstelle der Methoxygruppen am Silicium.

Die Polyurethanzusammensetzung kann weiterhin Weichmacher enthalten. Bevorzugt enthält die Polyurethanzusammensetzung weniger als 5 Gew.-%, besonders bevorzugt weniger als 1 Gew.-%, insbesondere weniger als 0.1 Gew.-%, Weichmacher.

Dies ist dahingehend von Vorteil, dass keine Schwächung von Klebeverbindungen oder Abdichtungen, welche durch aus der ausgehärteten Zusammensetzung migrierende Weichmacher ausgelöst ist, auftreten kann.

Eine bevorzugte Polyurethanzusammensetzung enthält eine erste Komponente, welche einen Gehalt an Polyolen und Polyaminen im Bereich von 30 bis 90 Gew.-%, bevorzugt 40 bis 80 Gew.-%, insbesondere 50 bis 60 Gew.-%, und einen Gehalt an Füllstoffen von 10 bis 70 Gew.-%, bevorzugt 20 bis 60 Gew.- %, insbesondere 20 bis 40 Gew.-% aufweist und gegebenenfalls weitere Bestandteile enthält.

Eine bevorzugte Polyurethanzusammensetzung enthält eine zweite Komponente, welche 50 bis 100 Gew.-%, insbesondere 90 bis 100 Gew.-% einer bei Raumtemperatur flüssigen Form von MDI enthält.

Eine weitere bevorzugte Polyurethanzusammensetzung enthält eine zweite Komponente, welche einen Gehalt an Isocyanat-terminiertem Polyurethanprepolymer im Bereich von 10 bis 80 Gew.-%, bevorzugt 25 bis 70 Gew.-% enthält, wobei das Prepolymer auf einem hydrophoben Diol **P2** basiert.

Im Zusammenhang der vorliegenden Erfindung hat es sich als überraschend herausgestellt, dass mit Zusammensetzungen, in denen die zweite Komponente ein Isocyanat-terminiertes Polyurethanprepolymer enthält, das durch Umsetzung eines hydrophoben Diols **P2** sowie eines Polyisocyanats erhältlich ist, im Vergleich zu einer analogen Zusammensetzung, bei der dasselbe Diol **P2** in der ersten Komponente enthalten ist, verbesserte Bruchdehnungs- und Zugfestigkeitswerte erhalten werden, während das E-Modul etwas tiefer ausfällt. Dabei kann es, abhängig von den gewünschten Applikationseigenschaften, bevorzugt sein, dass die zweite Komponente entweder im Wesentlichen vollständig aus einem nicht zu einem Polyurethanprepolymer umgesetzten Polyisocyanat besteht oder ein Isocyanat-terminiertes Polyurethanprepolymer enthält, das durch Kombination eines Polyisocyanats mit dem hydrophoben Diol **P2** gebildet wurde.

Bevorzugt ist es im Rahmen der vorliegenden Erfindung weiterhin, wenn die erfindungsgemäße Zusammensetzung nach der Aushärtung eine Bruchdehnung im Bereich von 200% bis 500%, bevorzugt im Bereich von 250% bis 400%, aufweist.

Weiterhin ist es bevorzugt, wenn das E-Modul (bestimmt im Bereich von 0.5 bis 5% Dehnung) im Bereich von 3 bis 5 MPa, insbesondere im Bereich von 3 bis 4 MPa, liegt.

Weiterhin ist es bevorzugt, wenn die Zugfestigkeit bei 23°C im Bereich von 2.5 bis 5 MPa, insbesondere im Bereich von 3 bis 4.5 MPa, liegt.

Besonders bevorzugt ist es, wenn die Zusammensetzung nach der Aushärtung in Bezug auf die Bruchdehnung, das E-Modul und die Zugfestigkeit alle im Vorstehenden genannten Vorgaben erfüllt.

Die Herstellung der beiden Komponenten erfolgt getrennt voneinander und, zumindest für die zweite Komponente, vorzugsweise unter Ausschluss von Feuchtigkeit. Beide Komponenten werden typischerweise jeweils in einem eigenen Gebinde gelagert.

Die weiteren Bestandteile der erfindungsgemäßen Polyurethanzusammensetzung können als Bestandteil der ersten oder der zweiten Komponente vorhanden sein, wobei gegenüber Isocyanatgruppen reaktive weitere Bestandteile bevorzugt Bestandteil der ersten Komponente sind.

Die beiden Komponenten werden vor dem Vermischen der Zusammensetzung getrennt voneinander gelagert und erst bei oder unmittelbar vor der Anwendung miteinander vermischt.

Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heißt, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmaß verändern.

Für die Anwendung der Zusammensetzung werden die erste und die zweite Komponente miteinander vermischt. Das Mischen erfolgt typischerweise über Statikmischer oder mit Hilfe von dynamischen Mischern. Beim Mischen ist vorzugsweise darauf zu achten, dass die beiden Komponenten möglichst homogen vermischt werden. Werden die Komponenten unvollständig gemischt, treten lokale Abweichungen vom vorteilhaften Mischungsverhältnis auf, was sich in einer Verschlechterung der mechanischen Eigenschaften auswirken kann. Beim Kontakt der ersten Komponente mit Isocyanatgruppen der zweiten Komponente beginnt die Aushärtung durch chemische Reaktion. Dabei reagieren Hydroxylgruppen und primäre und sekundäre Aminogruppen und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet die Zusammensetzung zu einem festen Material aus. Dieser Vorgang wird auch als Vernetzung bezeichnet. Dabei entsteht eine ausgehärtete Polyurethanzusammensetzung.

Die erfindungsgemäße zweikomponentige Polyurethanzusammensetzung ist vorteilhaft verwendbar als struktureller Klebstoff oder als Dichtungsmasse.

Die Erfindung betrifft somit auch ein Verfahren zum Verkleben von einem ersten Substrat mit einem zweiten Substrat, welches die Schritte umfasst:
- Mischen der vorstehend beschriebenen ersten und zweiten Komponente,
- Applizieren der vermischten Polyurethanzusammensetzung auf mindestens eine der zu verklebenden Substratoberflächen, und
- Fügen der beiden Substrate innerhalb der Offenzeit der vermischten Polyurethanzusammensetzung.

Dabei können die beiden Substrate aus dem gleichen oder einem unterschiedlichen Materialien bestehen.

Geeignete Substrate sind insbesondere
- Glas, Glaskeramik, Glasmineralfasermatten;
- Metalle oder Legierungen, wie Aluminium, Eisen, Stahl oder Buntmetalle, oder oberflächenveredelte Metalle oder Legierungen, wie verzinkte oder verchromte Metalle;
- beschichtete oder lackierte Substrate, wie pulverbeschichtete Metalle oder Legierungen oder lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Polystryrol (PS), (Ethylen/Propylen-Copolymere (EPM) oder Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) oder Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites; oder
- Beton, Mörtel, Ziegel, Gips oder Natursteine wie Granit, Kalkstein, Standstein oder Marmor.

In besagtem Verfahren ist eines oder beide Substrate bevorzugt ein Metall, eine Glaskeramik oder ein Glas, ein glasfaserverstärkter Kunststoff oder ein kohlefaserverstärkter Kunststoff, ein Thermoset auf Epoxybasis oder ein Polymersubtrat mit geringer Oberflächenenergie wie ein Polyolefin- Polymethylmethacrylat- oder Polycarbonatsubstrat.

Insbesondere ist eines oder beide Substrate ein Metall, eine Keramik, ein glasfaserverstärkter Kunststoff, ein kohlefaserverstärkter Kunststoff oder ein Polymersubtrat mit geringer Oberflächenenergie wie ein Polyolefin-, Polymethylmethacrylat- oder Polycarbonat-Substrat.

Besonders bevorzugt ist eines oder beide Substrate ein Metall, insbesondere Stahl, oder ein Polymersubtrat mit geringer Oberflächenenergie wie ein Polyolefin-, Polymethylmethacrylat- oder Polycarbonat-Substrat.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Die Erfindung betrifft ferner ein Verfahren zum Abdichten, insbesondere von Fugen und Spalten zwischen zwei Substraten, welches die Schritte umfasst:
- Mischen der vorstehend beschriebenen ersten und zweiten Komponente,
- Applizieren der vermischten Polyurethanzusammensetzung auf ein Substrat oder zwischen zwei Substrate innerhalb der Offenzeit.

In diesen Verfahren zum Abdichten sind die im Vorstehenden für das Verfahren zum Verkleben erwähnten Substrate besonders geeignet.

Die beschriebene zweikomponentige Polyurethanzusammensetzung ist ebenfalls vorteilhaft verwendbar als Vergussmasse.

Ein weiterer Aspekt der vorliegenden Erfindung betrifft die Verwendung der beschriebenen zweikomponentigen Polyurethanzusammensetzung als Klebstoff oder Dichtstoff, insbesondere für Kunststoff-, Kompositwerkstoff- oder Metall-Substrate in der Bau- und Fertigungsindustrie, oder im Fahrzeugbau, besonders bevorzugt für die Anbauteilverklebung, Montage, Karosserieverklebung, Modulverklebung, Scheibenverklebung, Scheinwerferverklebung, Nahtabdichtung oder Hohlraumversiegelung, wobei die beiden Komponenten vermischt werden und die vermischte Zusammensetzung auf mindestens ein Substrat aufgebracht und anschließend, gegebenenfalls nach In-Kontaktbringen mit einem weiteren Substrat innerhalb der Offenzeit, aushärtet.

Die erfindungsgemäße Polyurethanzusammensetzung zeichnet sich durch eine hohe Festigkeit und Elastizität, welche über einen weiten Temperaturbereich von etwa -45°C bis 150°C relativ konstant ist, und über gute, weitgehend temperaturunabhängige Haftungseigenschaften auf metallischen und nichtmetallischen Substraten aus. Aufgrund dieser Eigenschaften ist die erfindungsgemäße Polyurethanzusammensetzung besonders geeignet als struktureller Klebstoff für Verklebungen, welche unter Umgebungstemperaturen im Freien beansprucht werden.

Durch den Anteil an Polybutadienpolyol **P1** ist die ausgehärtete Zusammensetzung sehr hydrophob und wasserabweisend. Dies kann einen hohen Wasserdampfdiffusionswiderstand des Materials begünstigen. Dadurch ist die Zusammensetzung insbesondere auch geeignet für Verklebungen, bei denen Wasserdampf-empfindliche Komponenten, beispielsweise elektronische Bauteile oder Scheinwerfer, klebend abgedichtet werden sollen.

Ebenfalls vorteilhaft verwendbar ist die erfindungsgemäße Polyurethanzusammensetzung als Vergussmasse, insbesondere als Vergussmasse für das Verfüllen von Spalten oder Fugen, zu Reparaturzwecken als Belastungsausgleichsmasse oder zum Schutz von elektronischen Bauteilen.

### Beispiele

**Verwendete Substanzen:**

| | |
|---|---|
| Poly bd R45 | Polybutadienpolyol, OH-Funktionalität ca. 2.5, mittleres Molekulargewicht ca. 2800 g/mol, OH-Zahl 47.1 mg KOH/g, (Poly bd^{®} R-45HTLO von Cray Valley) |
| PolyTHF 2000 | Polytetramethylenoxiddiol, mittleres Molekulargewicht ca. 2000 g/mol, OH-Zahl 56 mg KOH/g (PolyTHF^{®} 2000 von BASF) |
| Kuraray P2010 | Polyesterdiol, mittleres Molekulargewicht ca. 2000 g/mol, OH-Zahl 56 mg KOH/g (Kuraray P-2010 von Kuraray) |
| Krasol 2000 | Polybutadiendiol, OH-Funktionalität ca. 1.9, mittleres Molekulargewicht ca. 2000 g/mol, OH-Zahl 50 mg KOH/g, (Krasol^{®} LBH P-2000 von Cray Valley) |
| Caradol | Polypropylenoxiddiol, mittleres Molekulargewicht ca. 2000 g/mol, OH-Zahl 56 mg KOH/g (Caradol^{®} ED 56 von Shell) |
| Desmophen C1200 | Polyestercarbonatdiol, mittleres Molekulargewicht ca. 2000 g/mol, OH-Zahl 56 mg KOH/g (Desmophen^{®} C 1200 von Bayer Material Science) |
| Versalink P-1000 | p-Aminobenzoesäurediester von Polytetramethylenoxiddiol, mittleres Molekulargewicht ca. 1200 g/mol, Amin-Zahl 95 mg KOH/g (Versalink^{®} P-1000 von Air Products) |
| Versalink P-650 | p-Aminobenzoesäurediester von Polytetramethylenoxiddiol, mittleres Molekulargewicht ca. 850 g/mol, Amin-Zahl 120 mg KOH/g (Versalink P-650 von Air Products) |
| Katalysator | Bismuth(III)-carboxylat (K-Kat^{®} XC-C227 von King Industries) |
| Füllstoff | Mineralischer Füllstoff auf Basis von Calciumcarbonat (Winnofil^{®} SPT von Solvay) |
| Russ | Monarch^{®} 120 von Cabot |
| Polyisocyanat | Modifiziertes Diphenylmethandiisocyanat enthaltend MDI-Carbodiimid-Addukte, bei Raumemperatur flüssig, NCO-Gehalt 29.4 Gew.-% (Isonate^{®} M 143 von Dow) |
| Krasol - MDI Prep | Prepolymer aus 82 Gew.-% Krasol^{®} LBH P 2000 (s.o.) und 18 Gew.-% MDI (Lupranat^{®} MI von BASF mit 2,4'- und 4,4'-MDI im Gewichtsverhältnis 1:1) |
| Krasol - TDI Prep | Prepolymer aus 87 Gew.-% Krasol^{®} LBH P 2000 (s.o.) und 13 Gew.-% TDI (Desmodur^{®} T-80 von Bayer) |
| C1200 - TDI Prep | Prepolymer aus 85 Gew.-% Desmophen^{®} C1200 (s.o.) und 15 Gew.-% TDI (Desmodur^{®} T-80 von Bayer) |
| Desmophen - MDI Prep | Prepolymer aus 80 Gew.-% Desmophen^{®} C1200 (s.o.) und 20 Gew.-% MDI (Lupranat^{®} MI von BASF mit 2,4'- und 4,4'-MDI im Gewichtsverhältnis 1:1) |

### Herstellung von erfindungsgemäßen Polyurethanzusammensetzungen:

Für jede Zusammensetzung wurden die in den Tabellen 1, 3 und 5 angegebenen Inhaltsstoffe in den angegebenen Mengen (in Gewichtsteilen) der ersten Komponente-1 mittels eines Vakuumdissolvers unter Feuchtigkeitsausschluss zu einer homogenen Paste verarbeitet und aufbewahrt. Ebenso wurden die in den Tabellen 1, 3 und 5 angegebenen Inhaltsstoffe der zweiten Komponente-2 verarbeitet und aufbewahrt. Anschließend wurden die beiden Komponenten mittels eines SpeedMixers^{®} (DAC 150 FV, Hauschild) während 30 Sekunden zu einer homogenen Paste verarbeitet und diese unverzüglich folgendermaßen geprüft:
Zur Bestimmung der mechanischen Eigenschaften wurde der Klebstoff in Hantelform gemäß ISO 527, Teil 2, 1B, gebracht und während 24 h bei 23°C und anschließend während 3 h bei 80°C gelagert bzw. ausgehärtet. Nach einer Konditionierungszeit von 24 h wurden das Elastizitätsmodul (" **E-Modul")** die **Zugfestigkeit** und die **Bruchdehnung** der so hergestellten Probekörper gemäß ISO 527 auf einer Zwick Z020 Zugprüfmaschine bei der jeweils in den Tabellen angegebenen Temperatur und einer Prüfgeschwindigkeit von 200 mm/ min gemessen.

Zur Messung der **Zugscherfestigkeit** wurden diverse Prüfkörper hergestellt, wobei der Klebstoff jeweils 1 Minute nach Abschluss der Mischzeit zwischen zwei mit Heptan entfetteten KTL-lackierten Stahlblechen (e-coat) oder mit Isopropanol entfetten Platten aus Polycarbonat (unbeschichtetes Makrolon^{®}) in einer Schichtdicke von 1.6 mm und auf einer überlappenden Klebefläche von 15 x 45 mm aufgebracht wurde. Die Prüfkörper wurden während 24 h bei 23°C und anschließend während 3h bei 80°C gelagert bzw. ausgehärtet. Nach einer Konditionierungszeit von 24h bei 23 °C wurde die Zugscherfestigkeit nach DIN EN 1465 mit einer Zuggeschwindigkeit von 10 mm/min, sofern nicht anders angegeben, bestimmt.

Der **Tg**-Wert (Glasübergangstemperatur) wurde bestimmt anhand von DMTA-Messungen an streifenförmigen Proben (Höhe 2-3 mm, Breite 2-3 mm, Länge 8.5 mm), welche während 24 h bei 23°C und anschließend während 3h bei 80°C gelagert bzw. ausgehärtet wurden, mit einem Mettler DMA/SDTA 861e Gerät. Die Messbedingungen waren: Messung im Zugmodus, 10 Hz Anregungsfrequenz und Aufheizrate 5 K/min. Die Proben wurden auf - 70 °C abgekühlt und unter Bestimmung des komplexen Elastizitatsmoduls **E*** [MPa] auf 200 °C erwärmt, wobei ein Maximum in der Kurve für den Verlustwinkel "tan δ" als Tg-Wert abgelesen wurde.

Bei ***Z-1*** bis ***Z-15*** handelt es sich um erfindungsgemäße Beispiele. Bei ***Rf.1*** bis ***Rf.8*** handelt es sich um Vergleichsbeispiele. Die in den Tabellen 1, 3 und 5 angegebenen Werte bezeichnen jeweils Gewichtsteile in der Gesamtzusammensetzung.

**Tabelle 1**

| **Beispiele** | | ***Z-1*** | ***Z-2*** | ***Z-3*** | ***Z-4*** | ***Rf.1*** | ***Z-5*** |
|---|---|---|---|---|---|---|---|
| Komponente-1 : | | | | | | | |
| | Poly bd R45 | 60 | 60 | 60 | 60 | 70 | 60 |
| | PolyTHF 2000 | 10 | - | - | - | - | - |
| | Desmophen C1200 | - | 10 | - | - | - | - |
| | Kuraray P2010 | - | - | 10 | - | - | - |
| | Versalink P-650 | - | - | - | - | - | 10 |
| | Versalink P-1000 | - | - | - | 10 | - | - |
| | Füllstoff | 20 | 20 | 20 | 20 | 20 | 20 |
| | Russ | 10 | 10 | 10 | 10 | 10 | 10 |
| | Katalysator | 0.04 | 0.04 | 0.04 | 0.04 | 0.04 | 0.04 |

| Komponente-2: | | | | | | | |
|---|---|---|---|---|---|---|---|
| | Polyisocyanat | 9.0 | 9.0 | 9.0 | 10.1 | 9.2 | 11.2 |
| | | | | | | | |
| | Molverhältnis V1¹ | 5.0 | 5.0 | 5.0 | 3.0 | - | 2.4 |

| | | | | | | | |
|---|---|---|---|---|---|---|---|
| ¹ Verhältnis der Anzahl OH-Gruppen von Poly bd R45 zur Summe der Anzahl OH- und NH₂-Gruppen aus Poly THF 2000, Kuraray P2010, Desmophen C1200, Versalink P-650 und Versalink P-1000 | | | | | | | |

**Tabelle 2**

| **Beispiele** | ***Z-1*** | ***Z-2*** | ***Z-3*** | ***Z-4*** | ***Rf.1*** | ***Z-5*** |
|---|---|---|---|---|---|---|
| **Zugscherfestigkeit** [MPa] 1,6mm auf e-coat/e-coat | 2.8¹ 100CF | 2.5¹ 100CF | 2.9¹ 80CF/ 20SCF | 3.3¹ 100CF | 2.5¹ 100CF | 2.6¹ 95CF/ 5SCF |
| 1,6mm auf PC/PC² | n.b. | 2.7¹ 90CF/ 10SCF | 2.3¹ 70CF/ 30SCF | n.b. | 1.4¹ 90AF/ 10CF | 2.0¹ 100 SCF |
| **Zugfestigkeit** [MPa] 23 °C | 3.1 | 3.8 | 3.0 | 3.0 | 2.6 | 2.5 |
| **Bruchdehnung** [%] 23 °C | 394 | 383 | 299 | 231 | 182 | 169 |
| **E-Modul 0.5 bis 5%** [MPa ] 23 °C | 3.8 | 3.2 | 3.6 | 5.0 | 4.9 | 5.8 |

| **Shore A** | 58 | 54 | 57 | 65 | 66 | 61 |
|---|---|---|---|---|---|---|
| **1. Tg (°C)** | -47 | -56 | -56 | -60 | -58 | -54 |
| **2. Tg (°C)** | - | -10 | -17 | - | - | 70 |
| **3. Tg (°C)** | 168 | 160 | 160 | 155 | 158 | - |

| | | | | | | |
|---|---|---|---|---|---|---|
| ¹ bestimmt bei 20 mm/min; ² PC steht für Polycarbonat (Makrolon); "n.b." steht für "nicht bestimmt"; CF steht für cohesive failure; SCF steht für substrate/cohesive failure; AF steht für adhesive failure. | | | | | | |

**Tabelle 3**

| **Beispiele** | | ***Z-3*** | ***Z-6*** | ***Z-7*** | ***Z-8*** | ***Rf.2*** | ***Rf.3*** | ***Rf.4*** | ***Rf.5*** | ***Rf.6*** | ***Rf.7*** | ***Rf.8*** |
|---|---|---|---|---|---|---|---|---|---|---|---|---|
| Komponente-1 : | | | | | | | | | | | | |
| | Poly bd R45 | 60 | 60 | 63 | 66.5 | 45 | 25 | 21 | - | 60 | - | 45 |
| | Krasol 2000 | - | - | - | | - | | | 60 | - | 45 | - |
| | Kuraray P2010 | 10 | - | 7 | 3.5 | 25 | 45 | 49 | 10 | - | 25 | - |
| | Caradol | - | - | - | - | - | - | - | - | 10 | - | 25 |
| | Füllstoff | 20 | 20 | 20 | 20 | 20 | 20 | 20 | 20 | 20 | 20 | 20 |
| | Russ | 10 | 10 | 10 | 10 | 10 | 10 | 10 | 10 | 10 | 10 | 10 |
| | Katalysator | 0.04 | 0.04 | 0.04 | 0.04 | 0.04 | 0.04 | 0.04 | 0.04 | 0.04 | 0.04 | 0.04 |

| | Komponente-2: | | | | | | | | | | | |
|---|---|---|---|---|---|---|---|---|---|---|---|---|
| | Polyisocyanat | 9.0 | 9.0 | 9.0 | 8.9 | 9.4 | 9.9 | 10 | 10.2 | 8.9 | 10.2 | 9.8 |
| | Kuraray P2010 | - | 10 | - | - | - | - | - | - | - | - | - |
| Molverhältnis V1¹ | | 5.0 | 5.0 | 7.6 | 16.0 | 1.5 | 0.4 | 0.3 | (5.4) | (5.0) | 1.6 | 1.5 |

| | | | | | | | | | | | | |
|---|---|---|---|---|---|---|---|---|---|---|---|---|
| ¹ Verhältnis der Anzahl OH-Gruppen von Poly bd R45 (bzw. Krasol 2000) zur Summe der Anzahl OH- und NH₂-Gruppen aus Poly THF 2000 (bzw. Caradol), Kuraray P2010 und Desmophen C1200 | | | | | | | | | | | | |

**Tabelle 4**

| **Beispiele** | ***Z-3*** | ***Z-6*** | ***Z-7*** | ***Z-8*** | ***Rf.2*** | ***Rf.3*** | ***Rf.4*** | ***Rf.5*** | ***Rf.6*** | ***Rf.7*** | ***Rf.8*** |
|---|---|---|---|---|---|---|---|---|---|---|---|
| **Zugscherfestigkeit** [MPa] 1.6mm auf e-coat/e-coat¹ | 2.9¹ 80CF/ 20SCF | 2.6 90CF/ 10SCF | 2.2 80CF/ 20SCF | 2.5 80CF/ 20SCF | 1.8 60CF/ 40AF | 0.7 100SCF | 0.5 100SCF | 0.08 | 2.1 CF95 SCF5 | 0.04 | 1.05 100SCF |
| 1.6mm auf PC/PC² | 2.3¹ 70CF/ 30SCF | 2.8 80CF/ 20SCF | 2.4 70CF/ 30SCF | 2.5 50CF/ 50SCF | 2.1 90CF/ 10AF | 0.4 100AF | 0.3 90AF/ 10SCF | 0.06 | 2.4 50CF/ 50SCF | 0.03 | 0.9 95SCF/ 5AF |
| **Zugfestigkeit** [MPa] 23 °C | 3.0 | 3.8 | 3.1 | 2.6 | 4.0 | 4.9 | 4.0 | 0.3 | 2.5 | 0.4 | 2.3 |
| **Bruchdehnung** [%] | 299 | 378 | 358 | 288 | 527 | 726 | 736 | 153 | 351 | 238 | 473 |
| **E-Modul 0.5 bis 5%** [MPa] 23 °C | 3.6 | 3.1 | 3.1 | 3.3 | 2.7 | 2.7 | 2.5 | 1.5 | 2.3 | 0.8 | 1.6 |

| **Shore A** | 57 | 53 | 54 | 47 | 52 | 50 | 52 | 28 | 46 | 31 | 39 |
|---|---|---|---|---|---|---|---|---|---|---|---|
| **1. Tg (°C)** | -56 | -52 | -55 | -52 | -54 | -26 | -28 | -12 | -45 | -12 | -28 |
| **2. Tg (°C)** | -17 | -17 | -17 | -14 | -22 | - | - | - | - | - | 80 |
| **3. Tg (°C)** | 160 | 160 | 160 | 160 | 160 | 145 | 140 | 140 | 160 | 140 | 158 |

| | | | | | | | | | | | |
|---|---|---|---|---|---|---|---|---|---|---|---|
| ¹ bestimmt bei 20 mm/min; PC steht für Polycarbonat (Makrolon); CF steht für cohesive failure; SCF steht für substrate/cohesive failure; AF steht für adhesive failure. | | | | | | | | | | | |

**Tabelle 5**

| **Beispiele** | | ***Z-3*** | ***Z-9*** | ***Z-10*** | ***Z-11*** | ***Z-12*** | ***Z-13*** | ***Z-14*** | ***Z-15*** |
|---|---|---|---|---|---|---|---|---|---|
| Komponente-1 : | | | | | | | | | |
| | Poly bd R45 | 60 | 60 | 60 | 60 | 60 | 60 | 60 | 60 |
| | Kuraray P2010 | 10 | 10 | 10 | 10 | 10 | - | - | - |
| | Füllstoff | 20 | 20 | 20 | 20 | 20 | 20 | 20 | 20 |
| | Russ | 10 | 10 | 10 | 10 | 10 | 10 | 10 | 10 |
| | Katalysator | 0.04 | 0.04 | 0.04 | 0.04 | 0.04 | 0.04 | 0.04 | 0.04 |

| Komponente-2: | | | | | | | | | |
|---|---|---|---|---|---|---|---|---|---|
| | Polyisocyanat | 9.0 | 8.2 | 6.4 | 8.2 | 6.5 | 7.5 | 7.6 | 5.9 |
| | Krasol - MDI Prep | - | 8.2 | 25.6 | - | - | - | - | - |
| | Krasol - TDI Prep | - | - | - | 8.3 | 26 | - | - | - |
| | C1200 - TDI Prep | - | - | - | - | - | 7.5 | - | - |
| | C1200- MDI Prep | - | - | - | - | - | - | 7.6 | 23.6 |
| Molverhältnis V1¹ | | 5.0 | 5.6 | 6.9 | 5.7 | 7.1 | 7.8 | 8.3 | 2.7 |

| | | | | | | | | | |
|---|---|---|---|---|---|---|---|---|---|
| ¹ Verhältnis der Anzahl OH-Gruppen von Poly bd R45 zur Summe der Anzahl OH- und NH₂-Gruppen aus Poly THF 2000, Kuraray P2010, Desmophen C1200 und Versalink P-650 und Versalink P-1000 | | | | | | | | | |

**Tabelle 6**

| **Beispiele** | ***Z-3*** | ***Z-9*** | ***Z-10*** | ***Z-11*** | ***Z-12*** | ***Z-13*** | ***Z-14*** | ***Z-15*** |
|---|---|---|---|---|---|---|---|---|
| **Zugscherfestigkeit** [MPa]1.6mm auf e-coat/e-coat | 2.9¹ 80CF/ 20SCF | 2.7 100CF | 3.3 10CF/ 90SCF | 2.9 10CF/ 90SCF | 3.1 10CF/ 90SCF | 2.9 90CF/ 10SCF | 2.7 100CF | 3.3 90CF/ 10SCF |
| 1.6mm auf PC/PC² | 2.3¹ 70CF/ 30SCF | 3.4 100CF | 3.4 10CF/ 90SCF | 2.9 30CF/ 70SCF | 3.2 80CF/ 20SCF | 3.1 100CF | 3.4 100CF | 3.4 90CF/ 10SCF |
| **Zugfestigkeit** [MPa] 23 °C | 3.0 | 2.9 | 3.2 | 3.0 | 2.1 | 3.4 | 4.0 | 3.4 |
| **Bruchdehnung** [%] 23 °C | 299 | 292 | 327 | 415 | 524 | 295 | 282 | 390 |
| **E-Modul 0.5 bis 5%** [MPa] 23 °C | 3.6 | 3.4 | 3.1 | 2.4 | 3.6 | 4.1 | 4.2 | 2.9 |

| Shore A | 57 | 55 | 58 | 51 | 48 | 61 | 59 | 53 |
|---|---|---|---|---|---|---|---|---|
| **1. Tg (°C)** | -56 | -47 | -47 | -40 | -38 | -53 | -52 | -53 |
| **2. Tg (°C)** | -17 | -17 | -17 | - | - | -15 | -12 | -14 |
| **3. Tg (°C)** | 160 | 162 | 162 | 158 | 158 | 160 | 160 | 160 |

| | | | | | | | | |
|---|---|---|---|---|---|---|---|---|
| ¹ bestimmt bei 20 mm/min; ² PC steht für Polycarbonat (Makrolon); CF steht für cohesive failure; SCF steht für substrate/cohesive failure | | | | | | | | |

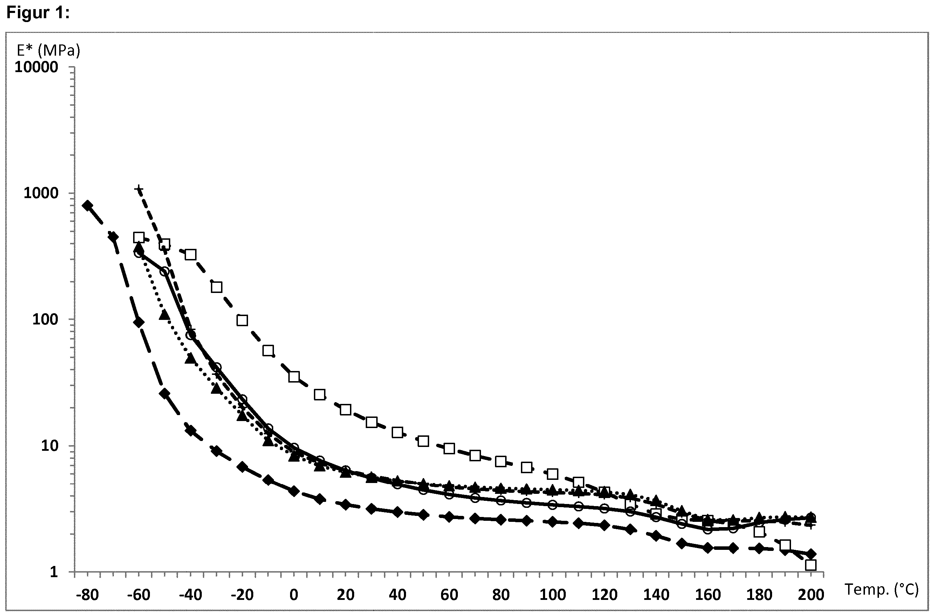

Der Verlauf des E-Moduls (komplexer Elastizitatsmodul E* [MPa] in Abhängigkeit von der Temperatur [°C]) für die Zusammensetzungen Rf.1 (◆), Rf. 3 (□), Z-3 (▲), Z-6 (∘) und Z-10 (+) ist in Figur 1 wiedergegeben. Daraus ergibt sich, dass die nicht erfindungsgemässen Zusammensetzungen im Temperaturbereich zwischen -20 °C und 120°C eine verhältnismäßig starke Abhängigkeit des komplexen Elastizitätsmoduls E* von der Temperatur zeigen (Rf. 3) oder, wie Rf.1, bei diesen Temperaturen zwar eine sehr geringe Abhängigkeit des komplexen Elastizitätsmoduls von der Temperatur haben aber auch nur sehr tiefe Werte für die Elastizitätsmodule aufweisen. Für die erfindungsgemäßen Zusammensetzungen zeigt sich im Vergleich dazu ein mit Rf.1 vergleichbar geringe Abhängigkeit des Moduls E* von der Temperatur bei um den Faktor 2-3 fach höheren Modulwerten. Im Vergleich zu Rf. 3 werden deutlich höhere Werte für den Modul E* im Temperaturen oberhalb von 120 °C erhalten.

Rf. 1 zeigt zwar ein fast ideales weich-elastisches Verhalten mit sehr geringer Abhängigkeit des Elastizitatsmoduls E* von der Temperatur, ist aber als Klebstoff wegen unzureichender Haftungseigenschaften, insbesondere auf Polycarbonat, ungeeignet.

## Patentansprüche

1. Zweikomponentige Polyurethanzusammensetzung mit
- einer ersten Komponente, umfassend mindestens ein Polybutadienpolyol **P1** mit einem mittleren Molekulargewicht Mₙ im Bereich von 2'000 bis 10'000 g/mol und einer mittleren OH-Funktionalität im Bereich von 2.1 bis 4, und
- einer zweiten Komponente, umfassend mindestens ein Polyisocyanat und gegebenenfalls mindestens ein Isocyanat-terminiertes Polyurethanprepolymer,
wobei die Polyurethanzusammensetzung weiterhin
mindestens ein hydrophobes Diol **P2** mit einem mittleren Molekulargewicht Mₙ im Bereich von 500 bis 5'000 g/mol ausgewählt aus der Gruppe bestehend aus Polyesterdiolen, Polycarbonatdiolen und Polyetherdiolen mit einer mindestens 4 C-Atomen aufweisenden Repetiereinheit
und/oder
mindestens eine mit Aminogruppen terminierte hydrophobe Verbindung **P3** mit einem mittleren Molekulargewicht Mₙ im Bereich von 200 bis 2'000 g/mol enthält,
wobei das Molverhältnis **V1** der Anzahl Hydroxyl-Gruppen aus dem Polybutadienpolyol **P1** zur Anzahl Hydroxyl- und primärer und sekundärer Amino-Gruppen aus Diol **P2** und der Verbindung **P3** im Bereich von 2:1 bis 16:1 liegt und wobei das mittlere Molekulargewicht Mₙ mittels Gelpermeationschromatographie gegen Polystyrol als Standard bestimmt wird.

2. Zweikomponentige Polyurethanzusammensetzung gemäß Anspruch 1, **dadurch gekennzeichnet, dass** das Polybutadienpolyol **P1** eine mittlere OH-Funktionalität im Bereich von 2.1 bis 2.9 aufweist.

3. Zweikomponentige Polyurethanzusammensetzung gemäß Anspruch 1 oder 2, **dadurch gekennzeichnet, dass** sie mindestens ein Diol **P2** in Form eines aliphatischen oder cycloaliphatischen Diols, bevorzugt ein Polytetramethylenoxiddiol oder ein Polycarbonatdiol basierend auf 3-Methyl-1,5- pentandiol und 1,6 Hexandiol, oder ein Polyestercarbonatdiol basierend auf 1,6-Hexandiol und ε-Caprolacton oder ein Polyesterdiol basierend auf 3-Methyl-1,5-pentandiol und Adipinsäure oder Sebacinsäure, enthält.

4. Zweikomponentige Polyurethanzusammensetzung gemäß einem der Ansprüche 1 bis 3, **dadurch gekennzeichnet, dass** das Diol **P2** ein mittleres Molekulargewicht Mₙ im Bereich von 500 bis 2'000 g/mol aufweist.

5. Zweikomponentige Polyurethanzusammensetzung gemäß einem der vorstehenden Ansprüche, **dadurch gekennzeichnet, dass** die Verbindung **P3** ein p-Aminobenzoesäurediester von einem Polytetramethylenoxiddiol ist.

6. Zweikomponentige Polyurethanzusammensetzung gemäß einem der vorstehenden Ansprüche, **dadurch gekennzeichnet, dass** das Polyisocyanat 4,4'- oder 2,4'- oder 2,2'-Diphenylmethandiisocyanat oder ein beliebiges Gemisch dieser Isomeren (MDI), oder eine Mischung aus MDI und MDI-Homologen (polymeres MDI oder PMDI), oder eine Mischung aus MDI und davon abgeleiteten Oligomeren, Polymeren oder Derivaten ist.

7. Zweikomponentige Polyurethanzusammensetzung gemäß einem der vorstehenden Ansprüche, **dadurch gekennzeichnet, dass** das dem Isocyanat-terminierten Polyurethanprepolymer zugrundeliegende monomere Diisocyanat ausgewählt ist aus der Gruppe bestehend aus 4,4'- oder 2,4'- oder 2,2'-Diphenylmethandiisocyanat oder ein beliebiges Gemisch dieser Isomeren (MDI), 2,4- oder 2,6-Toluylendiisocyanat oder beliebige Gemische dieser Isomeren (TDI), 1-Isocyanato-3,3,5-trimethyl-5-isocyanatomethylcyclohexan (IPDI) und 1,6-Hexamethylendiisocyanat (HDI).

8. Zweikomponentige Polyurethanzusammensetzung gemäß einem der vorstehenden Ansprüche, **dadurch gekennzeichnet, dass** sie weiterhin mindestens einen Katalysator, bevorzugt ausgewählt aus der Gruppe bestehend aus Bismuth(III)-Verbindungen, Zn(II)-Verbindungen und Zirkonium(IV)-Verbindungen, enthält.

9. Zweikomponentige Polyurethanzusammensetzung gemäß Anspruch 8, **dadurch gekennzeichnet, dass** der Katalysator ein Bismuth(III)-carboxylat, ein Zn(ll)-carboxylat, ein Bismuth(III)-1,3-ketoacetat, ein Zirkonium(IV)-1,3-ketoacetat, ein Bismuth(III)-oxinat, ein Bismuth(III)-1,3-ketoamidat, ein Zirkonium(IV)-1,3-ketoamidat, ein Zirkonium(IV)-diketonat, oder eine Mischung davon ist.

10. Zweikomponentige Polyurethanzusammensetzung gemäß einem der vorstehenden Ansprüche, **dadurch gekennzeichnet, dass** sie weiterhin mindestens einen Füllstoff enthält.

11. Zweikomponentige Polyurethanzusammensetzung gemäß einem der vorstehenden Ansprüche, **dadurch gekennzeichnet, dass** sie weiterhin mindestens einen Haftvermittler, bevorzugt mindestens ein Organoalkoxysilan, enthält.

12. Zweikomponentige Polyurethanzusammensetzung gemäß einem der vorstehenden Ansprüche, **dadurch gekennzeichnet, dass** sie einen Gehalt an Weichmachern von weniger als 1 Gew.-% aufweist.

13. Verfahren zum Verkleben von einem ersten Substrat mit einem zweiten Substrat, welches die Schritte umfasst:
- Mischen der ersten und zweiten Komponente der Polyurethanzusammensetzung gemäß einem der Ansprüche 1 bis 12,
- Applizieren der vermischten Polyurethanzusammensetzung auf mindestens eine der zu verklebenden Substratoberflächen, und
- Fügen der beiden Substrate innerhalb der Offenzeit der vermischten Polyurethanzusammensetzung.

14. Verfahren gemäß Anspruch 13, **dadurch gekennzeichnet, dass** eines oder beide Substrate ein Metall, eine Keramik, ein glasfaserverstärkter Kunststoff, ein kohlefaserverstärkter Kunststoff oder ein Polymersubtrat mit geringer Oberflächenenergie wie ein Polyolefin-, Polymethylmethacrylat- oder Polycarbonat-Substrat ist.

15. Verwendung einer zweikomponentigen Polyurethanzusammensetzung gemäß einem der Ansprüche 1 bis 12 als Klebstoff oder Dichtstoff, wobei die beiden Komponenten vermischt werden und die vermischte Zusammensetzung auf mindestens ein Substrat aufgebracht und anschließend, gegebenenfalls nach In-Kontaktbringen mit einem weiteren Substrat innerhalb der Offenzeit, aushärtet.

## Claims

1. Two-component polyurethane composition comprising
- a first component comprising at least one polybutadiene polyol **P1** having an average molecular weight Mₙ in the range from 2'000 to 10'000 g/mol and an average OH functionality in the range from 2.1 to 4, and
- a second component comprising at least one polyisocyanate and optionally at least one isocyanate-terminated polyurethane prepolymer,
wherein the polyurethane composition further comprises
at least one hydrophobic diol **P2** having an average molecular weight Mₙ in the range from 500 to 5'000 g/mol selected from the group consisting of polyester diols, polycarbonate diols and polyether diols having a repeat unit having at least 4 carbon atoms
and/or
at least one hydrophobic compound **P3** terminated by amino groups and having an average molecular weight Mₙ in the range from 200 to 2'000 g/mol,
where the molar ratio **V1** of the number of hydroxyl groups from the polybutadiene polyol **P1** to the number of hydroxyl and primary and secondary amino groups from diol **P2** and the compound **P3** is in the range from 2:1 to 16:1, and where the average molecular weight Mₙ is determined by gel permeation chromatography against polystyrene as standard.

2. Two-component polyurethane composition according to Claim 1, **characterized in that** the polybutadiene polyol **P1** has an average OH functionality in the range from 2.1 to 2.9.

3. Two-component polyurethane composition according to Claim 1 or 2, **characterized in that** it comprises at least one diol **P2** in the form of an aliphatic or cycloaliphatic diol, preferably a polytetramethylene oxide diol or a polycarbonate diol based on 3-methylpentane-1,5-diol and hexane-1,6-diol, or a polyester carbonate diol based on hexane-1,6-diol and **ε**―caprolactone, or a polyester diol based on 3―methylpentane-1,5-diol and adipic acid or sebacic acid.

4. Two-component polyurethane composition according to any of Claims 1 to 3, **characterized in that** the diol **P2** has an average molecular weight Mₙ in the range from 500 to 2'000 g/mol.

5. Two-component polyurethane composition according to any of the preceding claims, **characterized in that** the compound **P3** is a p-aminobenzoic diester of a polytetramethylene oxide diol.

6. Two-component polyurethane composition according to any of the preceding claims, **characterized in that** the polyisocyanate is diphenylmethane 4,4'- or 2,4'- or 2,2'-diisocyanate or any mixture of these isomers (MDI), or a mixture of MDI and MDI homologs (polymeric MDI or PMDI), or a mixture of MDI and oligomers, polymers or derivatives derived therefrom.

7. Two-component polyurethane composition according to any of the preceding claims, **characterized in that** the parent monomeric diisocyanate of the isocyanate-terminated polyurethane prepolymer is selected from the group consisting of diphenylmethane 4,4'- or 2,4'- or 2,2'-diisocyanate or any mixture of these isomers (MDI), tolylene 2,4- or 2,6-diisocyanate or any mixtures of these isomers (TDI), 1-isocyanato-3,3,5-trimethyl-5-isocyanatomethylcyclohexane (IPDI) and hexamethylene 1,6-diisocyanate (HDI).

8. Two-component polyurethane composition according to any of the preceding claims, **characterized in that** it further comprises at least one catalyst, preferably selected from the group consisting of bismuth(III) compounds, Zn(II) compounds and zirconium(IV) compounds.

9. Two-component polyurethane composition according to Claim 8, **characterized in that** the catalyst is a bismuth(III) carboxylate, a Zn(II) carboxylate, a bismuth(III) 1,3-ketoacetate, a zirconium(IV) 1,3-ketoacetate, a bismuth(III) oxinate, a bismuth(III) 1,3-ketoamidate, a zirconium(IV) 1,3-ketoamidate, a zirconium(IV) diketonate, or a mixture thereof.

10. Two-component polyurethane composition according to any of the preceding claims, **characterized in that** it further comprises at least one filler.

11. Two-component polyurethane composition according to any of the preceding claims, **characterized in that** it further comprises at least one adhesion promoter, preferably at least one organoalkoxysilane.

12. Two-component polyurethane composition according to any of the preceding claims, **characterized in that** it has a content of plasticizers of less than 1% by weight.

13. Method of bonding a first substrate to a second substrate, comprising the steps of:
- mixing the first and second components of the polyurethane composition according to any of Claims 1 to 12,
- applying the mixed polyurethane composition to at least one of the substrate surfaces to be bonded, and
- joining the two substrates within the open time of the mixed polyurethane composition.

14. Method according to Claim 13, **characterized in that** one or both of the substrates is a metal, a ceramic, a glass fiber-reinforced plastic, a carbon fiber-reinforced plastic or a polymer substrate having low surface energy, such as a polyolefin, polymethylmethacrylate or polycarbonate substrate.

15. Use of a two-component polyurethane composition according to any of Claims 1 to 12 as an adhesive or sealant, wherein the two components are mixed and the mixed composition is applied to at least one substrate and then cured, optionally after contacting with a further substrate within the open time.

## Revendications

1. Composition de polyuréthane à deux composants, comportant :
- un premier composant, comprenant au moins un polybutadiènepolyol **P1** ayant une masse moléculaire moyenne Mₙ dans la plage de 2 000 à 10 000 g/mol et une fonctionnalité OH moyenne dans la plage de 2,1 à 4, et
- un second composant, comprenant au moins un polyisocyanate et éventuellement au moins un prépolymère de polyuréthane à terminaison isocyanate,
la composition de polyuréthane contenant en outre
au moins un diol hydrophobe **P2** ayant une masse moléculaire moyenne Mₙ dans la plage de 500 à 5 000 g/mol choisi dans le groupe consistant en les polyesterdiols, les polycarbonatediols et les polyétherdiols ayant un motif répétitif ayant au moins 4 atomes de carbone
et/ou
au moins un composé hydrophobe **P3** terminé par des groupes amino, ayant une masse moléculaire moyenne Mₙ dans la plage de 200 à 2 000 g/mol,
le rapport en moles **V1** du nombre des groupes hydroxyle du polybutadiènepolyol **P1** au nombre des groupes hydroxyle et amino primaire et secondaire du diol **P2** et du composé **P3** étant compris dans la plage de 2:1 à 16:1, et la masse moléculaire moyenne Mₙ étant déterminée par chromatographie par perméation de gel contre du polystyrène en tant qu'étalon.

2. Composition de polyuréthane à deux composants selon la revendication 1, **caractérisée en ce que** le polybutadiènepolyol **P1** présente une fonctionnalité OH moyenne dans la plage de 2,1 à 2,9.

3. Composition de polyuréthane à deux composants selon la revendication 1 ou 2, **caractérisée en ce qu'**elle contient au moins un diol **P2** sous forme d'un diol aliphatique ou cycloaliphatique, de préférence un poly(oxyde de tétraméthylène)diol ou un polycarbonate diol à base de 3-méthyl-1,5-pentanediol et de 1,6-hexanediol, ou un polyestercarbonatediol à base de 1,6-hexanediol et d**'ε**-caprolactone ou un polyesterdiol à base de 3-méthyl-1,5-pentanediol et d'acide adipique ou d'acide sébacique.

4. Composition de polyuréthane à deux composants selon l'une des revendications 1 à 3, **caractérisée en ce que** le diol **P2** présente une masse moléculaire moyenne Mₙ dans la plage de 500 à 2 000 g/mol.

5. Composition de polyuréthane à deux composants selon l'une des revendications précédentes, **caractérisée en ce que** le composé **P3** est un diester de l'acide p-aminobenzoïque d'un poly(oxyde de tétraméthylène)diol.

6. Composition de polyuréthane à deux composants selon l'une des revendications précédentes, **caractérisée en ce que** le polyisocyanate est un diisocyanate de 4,4'- ou de 2,4'- ou de 2,2'-diphénylméthane ou un mélange quelconque de ces isomères (MDI) ou un mélange de MDI et d'homologues du MDI (MDI polymère ou PMDI), ou un mélange de MDI et d'oligomères, polymères ou dérivés qui en dérivent.

7. Composition de polyuréthane à deux composants selon l'une des revendications précédentes, **caractérisée en ce que** le diisocyanate monomère à base d'un prépolymère de polyuréthane à terminaison diisocyanate est choisi dans le groupe consistant en le diisocyanate de 4,4'- ou de 2,4'- ou de 2,2'-diphénylméthane ou un mélange quelconque de ces isomères (MDI), le diisocyanate de 2,4- ou de 2,6-toluylène ou des mélanges quelconques de ces isomères (TDI), le 1-isocyanato-3,3,5-triméthyl-5-isocyanatométhylcyclohexane (IPDI) et le diisocyanate de 1,6-hexaméthylène (HDI).

8. Composition de polyuréthane à deux composants selon l'une des revendications précédentes, **caractérisée en ce qu'**elle contient en outre au moins un catalyseur, choisi de préférence dans le groupe consistant en les composés du bismuth(III), les composés du Zn(II) et les composés du zirconium(IV).

9. Composition de polyuréthane à deux composants selon la revendication 8, **caractérisée en ce que** le catalyseur est un carboxylate de bismuth(III), un carboxylate de Zn(II), un 1,3-cétoacétate de bismuth(III), un 1,3-cétoacétate de zirconium(IV), un oxinate de bismuth(III), un 1,3-cétoamidate de bismuth(III), un 1,3-cétoamidate de zirconium(IV), un dicétonate de zirconium(IV) ou un mélange de ceux-ci.

10. Composition de polyuréthane à deux composants selon l'une des revendications précédentes, **caractérisée en ce qu'**elle contient en outre une charge.

11. Composition de polyuréthane à deux composants selon l'une des revendications précédentes, **caractérisée en ce qu'**elle contient en outre au moins un promoteur d'adhérence, de préférence un organoalcoxysilane.

12. Composition de polyuréthane à deux composants selon l'une des revendications précédentes, **caractérisée en ce qu'**elle présente une teneur en plastifiants inférieure à 1 % en poids.

13. Procédé de collage d'un premier substrat à un second substrat, qui comprend les étapes :
- mélange du premier et du second composants de la composition de polyuréthane selon l'une des revendications 1 à 12,
- application de la composition de polyuréthane mélangée sur au moins l'une des surfaces du substrat à coller, et
- assemblage des deux substrats au cours du temps ouvert de la composition de polyuréthane mélangée.

14. Procédé selon la revendication 13, **caractérisé en ce que** l'un des substrats, ou les deux, est un métal, une céramique, un plastique renforcé par des fibres de verre, un plastique renforcé par des fibres de carbone ou un substrat polymère ayant une faible énergie superficielle, tel qu'un substrat de polyoléfine, de poly(méthacrylate de méthyle) ou de polycarbonate.

15. Utilisation d'une composition de polyuréthane à deux composants selon l'une des revendications 1 à 12 en tant qu'adhésif ou matériau d'étanchéité, les deux composants étant mélangés, et la composition mélangée étant appliquée sur au moins un substrat, et ensuite durcie, éventuellement après mise en contact avec un substrat supplémentaire au cours du temps ouvert.
